# EUROPEAN PATENT SPECIFICATION

(11) **EP 1 918 338 B1**
(45) Date of publication and mention of the grant of the patent: **06.10.2010**
(21) Application number: 06782603.2
(22) Date of filing: 10.08.2006
(51) Int. Cl.: C09D 183/04, B05D 7/24, C01G 23/00, C09D 1/00

(54) **COMPOSITE TITANIC ACID COATING FILM AND COMPOSITE TITANIC ACID-COATED RESIN SUBSTRATE**
VERBUNDTITANSÄUREBESCHICHTUNGSFILM UND VERBUNDTITANSÄUREBESCHICHTETES HARZSUBSTRAT
FILM DE REVÊTEMENT D'ACIDE TITANIQUE COMPOSITE ET SUBSTRAT DE RÉSINE REVÊTU D'ACIDE TITANIQUE COMPOSITE

(30) Priority: 25.08.2005 JP 2005244671
(43) Date of publication of application: 07.05.2008
(73) Proprietor: OTSUKA CHEMICAL COMPANY, LIMITED, Osaka-shi, Osaka 540-0021 (JP)
(72) Inventor: YAMAMOTO, Minoru, Tokushima-shi, Tokushima 771-0193 (JP); NOMOTO, Takuya, Tokushima-shi, Tokushima 771-0193 (JP)
(74) Representative: Merkle, Gebhard
(86) International application number: PCT/JP2006/315799
(87) International publication number: WO 2007/023678

(56) References cited:
- EP-A- 1 419 994
- WO-A1-03/016218
- JP-A- 2001 294 769
- JP-A- 2005 290 369
- UETSUKA H. ET AL. DAI 94 KAI CATSJ MEETING TORONKAI A YOKOSHU 27 September 2004, page 118, XP003008674
- OSHIDA K. ET AL. CSJ: THE CHEMICAL SOCIETY OF JAPAN DAI 84 KAI SHUNKI NENKAI KOEN YOKOSHU I 11 March 2004, page 484, XP003008675

## Description

### TECHNICAL FIELD

The present invention relates to a composite titanic acid coating film obtained by combining a flaky titanic acid and a metal alkoxide, and a composite titanic acid-coated resin substrate.

### BACKGROUND ART

Recently, there are proposed such techniques as forming an inorganic film on various kinds of base materials for the purpose of providing various functions to the base material. As one of these techniques, Patent Document 1 discloses a flaky titanic acid suspension that is obtained by treating a layered titanate with an acid and then having a basic compound act thereon for causing interlayer swelling or separation, and a titanic acid coating film obtained by coating and drying the flaky titanic acid suspension on a base material such as a resin film. The titanic acid coating film is formed by a very simple method for forming a coating film, and, as described in the Patent Document, it is expected to exert such effects as antireflection, high dielectric constant, photocatalytic action, ultraviolet ray shielding and heat ray reflection.

As described later, Patent Documents 2 - 4 disclose a method for producing a layered titanate. And, as described later, Patent Documents 5 and 6 disclose a method for producing a flaky titanic acid suspension.
Patent Document 1: WO 03/016218
Patent Document 2: Japanese Patent No. 2979132
Patent Document 3: WO 99/11574
Patent Document 4: Japanese Patent No. 3062497
Patent Document 5: Japanese Patent No. 2671949
Patent Document 6: WO 03/037797

### DISCLOSURE OF THE INVENTION

A purpose of the present invention is to provide a composite titanic acid coating film excellent in coating film hardness and adhesion, and a composite titanic acid-coated resin substrate.

The composite titanic acid coating film of the invention is characterized by being obtained by means of applying to a base material an aqueous medium suspension, which contains a flaky titanic acid obtained by treating a layered titanate with an acid followed by having an organic basic compound act thereon for causing interlayer swelling or separation, and a metal alkoxide, and then subjecting the resulting product to a heat treatment for causing crosslinking and curing the metal alkoxide.

The aqueous medium suspension for use in the invention contains a flaky titanic acid and a metal alkoxide. By applying the aqueous medium suspension to a base material and subjecting the resulting product to a heat treatment, the metal alkoxide is changed to a metal oxide and/or metal hydroxide through crosslinking and curing due to a so-called sol-gel reaction, to give a composite titanic acid coating film in which the flaky titanic acid is uniformly dispersed in the metal oxide and/or metal hydroxide matrix. This gives a significantly improved coating film hardness and adhesion to the composite titanic acid coating film.

The content of the metal alkoxide used in the invention is preferably from 1 to 100% by weight relative to the flaky titanic acid. In other words, the content of the metal alkoxide relative to 100 parts by weight of the flaky titanic acid is preferably from 1 to 100 parts by weight. By setting the metal alkoxide content within this range, it is possible to form a composite titanic acid film excellent in coating film hardness and adhesion.

The aqueous medium suspension used in the invention contains preferably an aminosilane coupling agent in from 0.1 to 30% by weight relative to the flaky titanic acid. In other words, the addition amount of the aminosilane coupling agent relative to 100 parts by weight of the flaky titanic acid is preferably from 0.1 to 30 parts by weight. This can further improve the coating film hardness and adhesion.

The layered titanate used in the invention is one represented preferably by a formula AₓM_{y}□_{z}Ti_{2-(y+z)}O₄ [wherein A and M represent different monovalent to trivalent metals, and □ represents a defective portion of Ti. x is a positive real number satisfying 0 < x < 1, and y and z respectively represent 0 or a positive real number satisfying 0 < y+z < 1]. For example, specifically, a layered titanate represented by K_{0.5-0.8}Li_{0.27}Ti_{1.73}O_{3.85-4} is mentioned.

The composite titanic acid-coated resin substrate of the invention is **characterized in that** the composite titanic acid coating film of the invention is formed on a resin substrate being a base material. From the standpoint of adhesion, the resin base material has preferably been subjected to a surface treatment.

### (Advantage of the Invention)

According to the invention, a composite titanic acid coating film excellent in coating film hardness and adhesion, and a composite titanic acid-coated resin substrate can be obtained.

### BEST MODE FOR CARRYING OUT THE INVENTION

Hereinafter, the present invention is described further in detail.

### <Aqueous medium suspension>

The aqueous medium suspension used in the invention contains a flaky titanic acid suspension, which is obtained by treating a layered titanate with an acid to give a flaky titanic acid followed by having a basic compound with an interlayer swelling action act thereon for causing interlayer swelling or separation, and a metal alkoxide. A method for obtaining a flaky titanic acid suspension is described in, for example, Patent Documents 1 and 5.

### <Layered titanate>

As a layered titanate to be a raw material, for example, according to the method disclosed in the Patent Document 2, cesium carbonate and titanium dioxide are mixed in a molar ratio of 1:5.3, which is burned at 800°C to give Cs_{0.7}Ti_{1.83}O₄. In addition, according to the method disclosed in the Patent Document 5, potassium carbonate, lithium carbonate and titanium dioxide are mixed in K/Li/Ti = 3/1/6.5 (molar ratio) and ground, and then burned at 800°C to give K_{0.8}Li_{0.27}Ti_{1.73}O₄. Further, according to the method disclosed in the Patent Document 4, it is also possible to burn a mixture, which is prepared by mixing an alkali metal, or alkali metal halide or sulfate as a flux to give a flux/raw material weight ratio of from 0.1 to 2.0, at from 700 to 1200° to give a layered titanate represented by a formula AₓM_{y}□_{z}Ti_{2-(y+z)}O₄ [wherein A and M represent different monovalent to trivalent metals, and □ represents a defective portion of Ti. x is a positive real number satisfying 0 < x < 1.0, and y and z respectively represent 0 or a positive real number satisfying 0 < y+z < 1]. A in the formula is a monovalent to trivalent metal, and is preferably at least one kind selected from K, Rb and Cs. M is a monovalent to trivalent metal different from metal A, and is preferably at least one kind selected from Li, Mg, Zn, Cu, Fe, Al, Ga, Mn, and Ni. Specific examples thereof include K_{0.80}Li_{0.27}Ti_{1.73}O₄, Rb_{0.75}Ti_{1.75}Li_{0.25}O₄, Cs_{0.70}Li_{0.23}Ti_{1.77}O₄, Ce_{0.70}□ _{0.18}Ti_{1.83}O₄, Ce_{0.70}Mg_{0.35}Ti_{1.65}O₄, K_{0.8}Mg_{0.4}Ti_{1.6}O₄, K_{0.8}Ni_{0.4}Ti_{1.6}O₄, K_{0.8}Zn_{0.4}Ti_{1.6}O₄, K_{0.8}Cu_{0.4}Ti_{1.6}O₄, K_{0.8}Fe_{0.8}Ti_{1.2}O₄, K_{0.8}Mn_{0.8}Ti_{1.2}O₄, K_{0.76}Li_{0.22}Mg_{0.05}Ti_{1.73}O₄, and K_{0.67}Li_{0.2}A_{10.07}Ti_{1.73}O₄. In addition, according to the method disclosed in the Patent Document 6, K_{0.5-0.7}Li_{0.27}Ti_{1.73}O_{3.85-3.95} which is obtained by washing K_{0.8}Li_{0.27}Ti_{1.73}O₄ with an acid and then burning the resulting product, can also be utilized.

### <Layered titanic acid>

A layered titanic acid can be obtained by, for example, treating the above-described layered titanate with an acid to substitute a changeable metal cation with a hydrogen ion or hydronium ion. An acid for use in the acid treatment is not particularly limited, and mineral acids such as hydrochloric acid, sulfuric acid, nitric acid, phosphoric acid and boric acid, and organic acids are usable. The kind of the layered titanic acid, the kind and concentration of the acid, and the slurry concentration of the layered titanic acid affect the exchange rate of the metal cation. In general, a lower acid concentration and a higher slurry concentration cause a larger amount of remaining interlayer metal cations, therefore the interlayer separation becomes not easy to give a large thickness of the flaky titanic acid after the separation. When removing metal cations is difficult, the acid treatment may repeatedly be performed according to need.

### <Flaky titanic acid suspension>

The flaky titanic acid suspension can be obtained by having a basic compound with an interlayer swelling action act the above-described layered titanic acid for causing interlayer swelling or separation. Examples of the basic compound with an interlayer swelling action include primary to tertiary amines and salts thereof, alkanolamines and salts thereof, quaternary ammonium salts, phosphonium salts, and amino acids and salts thereof. Examples of the primary amine include methylamine, ethylamine, n-propylamine, butylamine, pentylamine, hexylamine, octylamine, dodecylamine, stearylamine, 2-ethyl-hexyl amine, 3-methoxypropyl amine, 3-ethoxypropyl amine, and salts thereof. Examples of the secondary amine include diethylamine, dipentylamine, dioctylamine, dibenzylamine, di(2-ethyl hexyl)amine, di(3-ethoxypropyl)amine, and salts thereof. Examples of the tertiary amine include triethylamine, trioctylamine, tri(2-ethyl hexyl)amine, tri(3-ethoxypropyl)amine, dipolyoxyethylene dodecylamine, and salts thereof. Examples of the alkanolamine include ethanolamine, diethanolamine, triethanolamine, isopropanolamine, diisopropanolamine, triisopropanolamine, N,N-dimethylethanolamine, 2-amino-2-methyl-1-propanol, and salts thereof. Examples of the quaternary ammonium salt hydroxide include tetramethylammonium hydroxide, tetraethylammonium hydroxide, tetrapropylammonium hydroxide and tetrabutylammonium hydroxide. Examples of the quaternary ammonium salt include dodecyltrimethylammonium salts, cetyltrimethylammonium salts, stearyltrimethylammonium salts, benzyltrimethylammonium salts, benzyltributylammonium salts, trimethylphenyl ammonium salts, dimethyldistearyl ammonium salts, dimethyldidecyl ammonium salts, dimethylstearylbenzyl ammonium salts, dodecylbis(2-hydroxyethyl)methyl ammonium salts, trioctylmethyl ammonium salts, and dipolyoxyethylenedodecylmethyl ammonium salts.

Examples of the phosphonium salt include organic phosphonium salts such as tetrabutylphosphonium salt, hexadecyltributyl phosphonium salt, dodecyltrobutyl phosphonium salt, and dodecyltriphenyl phosphonium salt. In addition, amino acids such as 12-aminododecanic acid and aminocapronic acid, and salts thereof, and imines such as polyethyleneimine and salts thereof are also usable.

These basic compounds may be used in one kind or in several kinds in combination according to a purpose. In particular, a single basic compound with a high hydrophobicity does not enable the separation to proceed sufficiently, and, therefore, the use of a basic compound with a high hydrophilicity in combination is preferable.

In order to have a basic compound with an interlayer swelling action act thereon, a basic compound or a basic compound diluted with a water-based medium may be added with stirring to a suspension formed by dispersing a layered titanic acid having been subjected to an acid treatment or a warm-water treatment into a water-based medium. Or, the layered titanic acid or a suspension thereof may be added to a water-based solution of the basic compound.

The water-based medium or water-based solution means water, solvents soluble in water, or mixed solvents of water and a solvent soluble in water, or solutions using these.

Examples of the solvent soluble in water include alcohols such as methyl alcohol, ethyl alcohol and isopropyl alcohol, ketones such as acetone, ethers such as tetrahydrofuran and dioxane, nitriles such as acetonitrile, and esters such as ethyl acetate and propylene carbonate.

The addition amount of the basic compound is determined so as to give from 0.3 to 10 equivalent weights relative to the ion-exchange capacity of a layered titanate, preferably from 0.5 to 2 equivalent weights. Here, the ion-exchange capacity means the amount of exchangeable metal cations. For example, when a layered titanate is represented by a formula AₓM_{y}□_{z}Ti_{2-(y+z)}O₄ and the valencies of A and M are denoted by m and n, respectively, it means a value represented by mx+ny.

The average major axis of the flaky titanic acid is preferably from 1 to 100 µm, further preferably from 10 to 50 µm, and the average thickness thereof is preferably from 0.5 nm to 2 µm, further preferably from 1 nm to 1 µm.

For the average major axis of the flaky titanic acid, the average major axis of a layered titanate being a raw material is approximately kept in so far as no stirring with a strong shear force is performed in a process of performing the interlayer separation by having a basic compound act thereon.

The average major axis of a flaky titanic acid of 1 µm or less makes it not easy to form an even coating film, and that of 100 µm or more makes the synthesis of a layered titanate being a raw material difficult.

The average thickness of the flaky titanic acid is around 0.5 nm when it is separated down to a single layer. When it is 2 µm or more, a flaky titanic acid suspension can not keep a uniform dispersion state and the flaky titanic acid might begin to precipitate.

The concentration of the flaky titanic acid suspension is preferably from 0.01 to 50% by weight in terms of the solid content concentration of the flaky titanic acid, further preferably from 0.1 to 10% by weight. When the concentration is less than 0.01% by weight, the coating film is not formed easily because the viscosity of the suspension is low, and when it is more than 50% by weight, the handling thereof becomes difficult because the viscosity thereof is high.

The flaky titanic acid suspension used in the invention has generally a pH in the range of from 6 to 12 after having a basic compound act on the layered titanic acid for causing interlayer swelling or separation, but, more preferably, the pH thereof is adjusted in the range of from 6 to 9 by removing an excess basic compound by washing the same with water, or by neutralizing an excess basic compound using at least one kind of acid selected from phosphoric acids, water-soluble carboxylic acid compounds, boric acid and carbon dioxide. The use of one having a pH in the range of from 6 to 9 can improve the light resistance of a formed titanic acid film. When the pH is 6 or less, the flaky titanic acid begins to aggregate, to damage the dispersibility. Further, when an acid other than the above described ones, for example, a mineral acid such as hydrochloric acid or sulfuric acid is used for the neutralization, the flaky titanic acid begins to aggregate as well, to damage the dispersibility.

When removing an excess basic compound by washing with water, it is sufficient to repeat several times such operation as subjecting the flaky titanic acid suspension to centrifugal separation to remove the supernatant, followed by rediluting the concentrated flaky titanic acid dispersion that has been spun down with deionized water. The condition of the centrifugal separation is preferably from 5000 to 20000 rpm for from 5 minutes to 1 hour.

When the neutralization thereof is performed, at least one kind of acid selected from phosphoric acids, water-soluble carboxylic acid compounds, boric acid and carbon dioxide can be employed. As the phosphoric acid, for example, orthophosphoric acid, pyrophosphoric acid, methaphosphoric acid, and polyphosphoric acid can be used. As the water-soluble carboxylic acid compound, for example, formic acid, acetic acid, propionic acid, oxalic acid, malonic acid, glycolic acid, lactic acid and malic acid can be used.

When neutralizing the flaky titanic acid suspension, at least one kind of acid selected from the above or an aqueous solution thereof may be added while stirring the suspension, or carbon dioxide may be bubbled. A neutralized salt of a basic compound to be generated is preferably removed by centrifugal washing or the like.

The flaky titanic acid in the invention may also be a flaky titanic acid that is obtained by the action of an organic basic compound for causing interlayer swelling or separation, followed by substituting the organic basic compound with a cesium ion in an aqueous medium. By using the flaky titanic acid substituted with a cesium ion in such a manner, the light resistance of the formed composite titanic acid film can be improved. In order to substitute the organic basic compound with a cesium ion, it is sufficient to add a water-soluble cesium salt to the flaky titanic acid suspension and stir the resulting product for around 1 hour. As the water-soluble cesium salt, for example, cesium carbonate, cesium chloride, cesium nitrate, cesium acetate, cesium sulfate, cesium fluoride, or cesium hydroxide can be used. Among these, cesium carbonate is most preferable. The addition amount of the cesium salt is preferably from 0.1 to 1.0 equivalent weight relative to the ion-exchange capacity of the layered titanate described later, further preferably from 0.2 to 0.5 equivalent weight. When it is less than 0.1 equivalent weight, the amount of the organic basic compound substituted with a cesium ion is insufficient and, when it is more than 1.0 equivalent weight, sometimes no additional effect is exerted, uneconomically. An excess cesium salt and desorbed organic basic compound are desirably removed by centrifugal washing or the like after the treatment. The content of the cesium ion in the flaky titanic acid is preferably in the range from 10 to 30% by weight in terms of the CS₂O content, further preferably in the range from 15 to 25% by weight.

### <Metal alkoxide>

The aqueous medium suspension used in the invention is obtained by adding a metal alkoxide to the flaky titanic acid suspension. Examples of the metal alkoxide to be used include tetraalkoxysilanes such as tetramethoxysilane, tetraethoxysilane, tetraisopropoxysilane and tetrabutoxysilane, alkylalkoxysilanes such as methyltrimethoxysilane, methyltriethoxysilane, dimethyldiethoxysilane and ethyltriisopropoxysilane, tetraalkoxyzirconiums such as tetra-n-propoxyzirconium, tetraisopropoxyzirconium and tetrabutoxyzirconium, trialkoxyaluminums such as trimethoxyaluminum, triethoxyaluminum and tributoxyaluminum. Tetraethoxysilane is most preferable.

As a treatment method with the metal alkoxide, it is sufficient to add the metal alkoxide to the flaky titanic acid suspension and stir the mixture for from 1 to 24 hours, preferably from 6 to 12 hours. By the stirring after the addition, the metal alkoxide is hydrolyzed to some degree for causing the increase in hydrophilicity to give an even suspension.

The addition amount of the metal alkoxide is preferably from 1 to 100% by weight relative to the flaky titanic acid, further preferably from 5 to 50% by weight. When it is less than 1% by weight, the effect is insufficient, and, when it is more than 100% by weight, sometimes an additional effect is not exerted, uneconomically.

### <Aminosilane coupling agent>

To the aqueous medium suspension used in the invention, in addition to the flaky titanic acid suspension and the metal alkoxide, an aminosilane coupling agent may be added. Since the amino group of the added aminosilane coupling agent interacts electrostatically with the flaky titanic acid, an alkoxy group turns to the outside. As the result, the alkoxy group is built in the sol-gel reaction of the metal alkoxide. Consequently, the metal oxide and/or metal hydroxide matrix and the flaky titanic acid are strongly combined via the aminosilane coupling agent, and, therefore, the hardness and adhesion of the composite titanic acid coating film to be obtained can further be improved.

Examples of the aminosilane coupling agent to be used include γ-aminopropyltrimethoxysilane, γ-aminopropyltriethoxysilane, N-β-(aminoethyl)-γ-aminopropyltriethoxysilane, N-β-(aminoethyl)-γ-aminopropylmethyldimethoxysilane and N-phenyl-γ-aminopropyltrimethoxysilane. As a treatment method with the aminosilane coupling agent, it is sufficient to add the aminosilane coupling agent to the aqueous medium suspension containing the flaky titanic acid suspension and metal alkoxide and stir the mixture for from 1 to 24 hours, preferably from 1 to 2 hours. The addition amount of the aminosilane coupling agent is preferably from 0.1 to 30% by weight relative to the flaky titanic acid, further preferably from 1 to 10% by weight. When it is less than 0.1% by weight, the effect is insufficient, and, when it is more than 30% by weight, sometimes the dispersibility of the flaky titanic acid is damaged.

### <Formation of a composite titanic acid film>

For the formation of the composite titanic acid film in the invention, general methods such as roll coating, gravure coating, knife coating, dip coating and spray coating can be utilized. By applying the aqueous medium suspension of the invention to a base material followed by heat treatment to remove the solvent and, at the same time, to crosslink and cure the metal alkoxide through a sol-gel reaction based on the dehydration and condensation reaction, it is possible to obtain a composite titanic acid coating film in which the flaky titanic acid is evenly dispersed in the metal oxide and/or metal hydroxide matrix. It is presumed that, on this occasion, hydroxyl groups considered to exist on the surface and at the edge portions of the flaky titanic acid are built in the sol-gel reaction of the metal alkoxide, and that the flaky titanic acid and the metal oxide and/or metal hydroxide matrix are combined strongly. In addition, when the aminosilane coupling agent is used at the same time, as described above, the metal oxide and/or metal hydroxide matrix and the flaky titanic acid are combined further strongly via the aminosilane coupling agent.

The heat treatment temperature is from 60 to 200°C, preferably from 80 to 120°C, and the heat treatment time is from 0.5 to 3 hours, preferably from 1 to 2 hours.

The thickness of the composite titanic acid film is preferably from 0.01 to 100 µm, further preferably from 0.1 to 20 µm. When it is less than 0.01 µm, an expected effect may not be obtained, and, when it is more than 100 µm, cracks may occur in the coating film due to volume contraction resulting from the sol-gel reaction.

### <Resin substrate>

The base material used in the invention is not particularly limited, and glass, ceramics, metal, resin film and the like can be used. Among these, from the standpoint of the effect expected for the composite titanic acid coating film, in particular, resin substrates are preferable. The resin substrate is not particularly limited. Specific examples of the resin include single kind of polyolefin-based resin, acrylic-based resin, polyamide-based resin, polyurethane-based resin, polyester-based resin, polystyrene-based resin, polyacetal-based resin, polystyrene-based resin, polycarbonate-based resin, silicone-based resin, epoxy-based resin, melamine-based resin, cellulose-based resin, polyvinyl alcohol-based resin, urea-based resin, phenol-based resin, fluorine-containing resin and polybutadiene-based resin, and composite resins thereof.

From the standpoint of the adhesion, the resin base material has preferably been subjected to a surface treatment. The method of surface treatment is not particularly limited, and, for example, an ultraviolet treatment, corona discharge treatment, glow discharge treatment, flame treatment, high-frequency treatment, active plasma treatment, laser treatment, mechanical treatment, mixed acid treatment and ozone oxidation treatment can be used.

Further, a polymer, dispersant, surfactant, organic or inorganic sol and the like may be added to the aqueous medium suspension, in the range that does not damage the purpose, to form the composite titanic acid film.

### Examples

Hereinafter, the present invention is described specifically while referring to Examples and Comparative Examples, but the invention is not at all limited to the following Examples. In what follows, "%" and "part" mean those on the basis of weight, if not otherwise specified.

### <Synthesis of a flaky titanic acid suspension>

### (Synthesis Example 1)

A raw material obtained by pulverizing and mixing 67.01 g of titanium oxide, 26.78 g of potassium carbonate, 12.04 g of potassium chloride and 5.08 g of lithium hydroxide by a dry system was burned at 1020°C for 4 hours. For the obtained powder, 7.9 kg of a 10.9% aqueous slurry was prepared, to which 470 g of a 10% aqueous sulfuric acid solution was added and stirred for 2 hours to give a slurry of pH 7.0. The separated and washed material was dried at 110°C, and then burned at 600°C for 12 hours. The obtained white powder was a layered titanate, K_{0.5}Li_{0.27}Ti_{1.73}O_{3.9}, having an average major axis of 15 µm.

65 g of the layered titanate was dispersed into 5 kg of 3.5% hydrochloric acid, which was stirred and reacted at 40°C for 2 hours, followed by separation by suction filtration and washing with water. The remaining amount of K₂O in the obtained layered titanic acid was 2.0%, and the metal ion exchange rate was 94%.

The whole amount of the obtained layered titanic acid was dispersed into 1.6 kg of deionized water with stirring, to which a solution prepared by dissolving 34.5 g of dimethylethanolamine in 0.4 kg of deionized water was added and stirred at 40°C for 12 hours to give a flaky titanic acid dispersion having pH 9.9. By centrifuging the suspension at 10000 rpm for 10 minutes, the concentration thereof was adjusted to give 5.0% by weight. For the obtained flaky titanic acid dispersion, no precipitation of a solid content was observed even after being left at rest for a long time.

### (Synthesis Example 2)

A flaky titanic acid dispersion having pH 11.5 and concentration 5.0% by weight was obtained in the same way as in Synthesis Example 1, except for replacing the organic basic compound by n-propylamine. For the obtained flaky titanic acid dispersion, no precipitation of a solid content was observed even after being left at rest for a long time.

### (Synthesis Example 3)

200 g of the flaky titanic acid dispersion in the Synthesis Example 1 was adjusted to give a concentration of 1.7% by weight with deionized water, to which 120g of a 5% by weight aqueous cesium carbonate solution was added with stirring. The resulting product was stirred at room temperature for 1 hour to substitute the interlayer ion of the flaky titanic acid from dimethylethanolammonium to a cesium ion. By repeating the operation three times, in which the suspension was centrifuged at 10000 rpm for 10 minutes and the supernatant was removed followed by rediluting the precipitated concentrated flaky titanic acid dispersion with deionized water, excess cesium carbonate and desorbed dimethylethanolamine were removed together with the supernatant, to give a flaky titanic acid dispersion having an adjusted concentration of 5.0% by weight and pH 8.5. Further, by bubbling carbon dioxide, pH was adjusted to give 7.9, and, by recentrifugation, the concentration was adjusted to give 5.0% by weight. For the obtained flaky titanic acid dispersion, no precipitation of a solid content was observed even after being left at rest for a long time. A solid content obtained after the drying at 110°C for 12 hours showed a weight decrease of 1.8% by weight for 200°C or more by TG/DTA analysis, an interlayer distance of 9.3 Angstroms by XRD analysis, and a Cs₂O content of 20.2% by weight by fluorescent X-ray analysis. The Cs₂O content corresponds to 0.23 equivalent weight in terms of the amount of exchanged ions in the layered titanate.

### <Preparation of an aqueous medium suspension>

### (Synthesis Example 4)

To the flaky titanic acid dispersion in the Synthesis Example 1, tetraethoxysilnae was added in an amount equivalent to 20% by weight of the flaky titanic acid solid content, which was stirred at room temperature for 12 hours to prepare an aqueous medium suspension.

### (Synthesis Example 5)

To the flaky titanic acid dispersion in the Synthesis Example 2, tetraethoxysilnae was added in an amount equivalent to 30% by weight of the flaky titanic acid solid content, which was stirred at room temperature for 12 hours to prepare an aqueous medium suspension.

### (Synthesis Example 6)

To the flaky titanic acid dispersion in the Synthesis Example 3, tetraethoxysilnae was added in an amount equivalent to 20% by weight of the flaky titanic acid solid content, which was stirred at room temperature for 12 hours to prepare an aqueous medium suspension.

### (Synthesis Example 7)

To the aqueous medium dispersion in the Synthesis Example 4, γ-aminopropyltrimethoxysilane was added in an amount equivalent to 5% by weight of the flaky titanic acid solid content, which was stirred at room temperature for 1 hour to prepare an aqueous medium suspension.

### <Preparation of a composite titanic acid coating film>

### (Example 1)

The aqueous medium suspension obtained in the Synthesis Example 4 was applied onto a PET (polyethylene terephthalate) substrate (thickness: 75 µm), the surface of which had been corona-treated, with a film applicator, which was heat-treated at 100°C for 1 hour to prepare a composite titanic acid coating film having a thickness of 2 µm.

### (Example 2)

A composite titanic acid coating film was prepared in the same way as in Example 1 using the flaky titanic acid dispersion in the Synthesis Example 5.

### (Example 3)

A composite titanic acid coating film was prepared in the same way as in Example 1 using the flaky titanic acid dispersion in the Synthesis Example 6.

### (Example 4)

The aqueous medium suspension obtained in the Synthesis Example 4 was applied onto a PP (polypropylene) substrate (thickness: 75 µm), the surface of which had been corona-treated, with a film applicator, which was heat-treated at 100°C for 1 hour to prepare a composite titanic acid coating film having a thickness of 2 µm.

### (Example 5)

A composite titanic acid coating film was prepared in the same way as in Example 4 using the flaky titanic acid dispersion in the Synthesis Example 7.

### (Comparative Example 1)

A titanic acid coating film was prepared in the same way as in Example 1 using the flaky titanic acid dispersion in the Synthesis Example 1.

### (Comparative Example 2)

A titanic acid coating film was prepared in the same way as in Example 1 using the flaky titanic acid dispersion in the Synthesis Example 2.

### <Evaluation of coating film hardness and adhesion>

For composite titanic acid coating films in Examples 1 to 5 and Comparative Examples 1 and 2, coating film hardness and adhesion were evaluated by testing methods below. Results thereof are shown in Table 1.

### [Coating film hardness]

A pencil hardness test was performed according to JIS S-6006 to evaluate the coating film hardness.

### [Adhesion]

A cross-cut tape test was performed according to JIS D-0202. That is, 100 grids of 1 mm² were formed on the surface of the inorganic coating film with a knife, on which an adhesive tape was pressed strongly, and then the tape was quickly pulled up to be peeled off in 90° direction from the surface. Then, the ratio of the number of grids remaining on the inorganic coating film was defined as an index of adhesion.

### <Evaluation of light resistance>

For the titanic acid coating films in Examples 1 and 3, light resistance was evaluated by a testing method described below.

### [Light resistance]

For the titanic acid coating film, a 300-hour accelerated light resistance test was performed using a dual cycle sunshine weather meter WEL-SUN-DC (manufactured by SUGA TEST INSTRUMENTS, black panel temperature: 60°C), to evaluate light resistance using the variation of color difference (ΔE) from the beginning. Results are shown in Table 2.

**[Table 1]**

| Composite Titanic Acid Coating Film | Pencil Hardness | Adhesion |
|---|---|---|
| Example 1 | 4H | 100/100 |
| Example 2 | 5H | 100/100 |
| Example 3 | 4H | 100/100 |
| Example 4 | 3H | 82/100 |
| Example 5 | 5H | 100/100 |
| Comparative Example 1 | 2H | 52/100 |
| Comparative Example 2 | 3H | 44/100 |

As is clear by comparing Examples 1 and 2 with Comparative Examples 1 and 2, it can be understood that the composite titanic acid coating film formed by adding tetraethoxysilane being a metal alkoxide to the flaky titanic acid according to the invention has an improved coating film hardness and adhesion, as compared with titanic acid coating films formed of the flaky titanic acid alone. In addition, from the comparison between Example 4 and Example 5, it can be understood that the use of the aminosilane coupling agent at the same time further improves the coating film hardness and adhesion.

**[Table 2]**

| Composite Titanic Acid Coating Film | ΔE |
|---|---|
| Example 1 | 5.3 |
| Example 3 | 0.4 |

As shown in Table 2, it can be understood that the composite titanic acid coating film in Example 3, which is formed using the flaky titanic acid suspension in which the organic basic compound has been substituted with a cesium ion, has an improved light resistance as compared with the composite titanic acid coating film in Example 1.

## Claims

1. A composite titanic acid coating film obtained by the steps of:
applying an aqueous medium suspension onto a base material, the suspension comprising a flaky titanic acid and a metal alkoxide, and the flaky titanic acid being prepared by treating a layered titanate with an acid, followed by having an organic basic compound act thereon for causing interlayer swelling or separation; and
subjecting the resulting product to a heat treatment to crosslink and cure the metal alkoxide.

2. The composite titanic acid coating film according to claim 1, wherein the content of the metal alkoxide is from 1 to 100% by weight relative to the flaky titanic acid in the aqueous medium suspension.

3. The composite titanic acid coating film according to claim 1 or 2, wherein the aqueous medium suspension further comprises an aminosilane coupling agent in the amount of 0.1 to 30% by weight relative to the flaky titanic acid.

4. The composite titanic acid coating film according to any of claims 1 - 3, wherein the layered titanate is represented by a formula A_{y}M_{y}□_{z}Ti_{2-(y+z)}O₄ [wherein A and M represent different monovalent to trivalent metals, and □ represents a defective portion of Ti. x is a positive real number satisfying 0 < x < 1, and y and z respectively represent 0 or a positive real number satisfying 0 < y+z < 1].

5. The composite titanic acid coating film according to any of claims 1 - 4, wherein the layered titanate is represented by a formula K_{0.5-0.8}Li_{0.27}Ti_{1.73}O_{3.85-4}.

6. A composite titanic acid-coated resin substrate, wherein the titanic acid coating film as described in any of claims 1 to 5 is formed on a resin substrate as a base material.

7. The composite titanic acid-coated resin substrate according to claim 6, wherein the resin substrate has been subjected to a surface treatment.

## Patentansprüche

1. Verbundtitansäurebeschichtungsfilm, erhaltend durch die Schritte:
Aufbringen einer wässrigen Mediumsuspension auf ein Grundmaterial, wobei die Suspension eine flockenartige Titansäure und ein Metallalkoxid umfasst, und die flockenartige Titansäure hergestellt ist durch Behandeln eines Schichttitanats mit einer Säure, woraufhin eine organische basische Verbindung darauf wirken gelassen wird, um ein Zwischenschichtquellen oder Separation zu verursachen; und
Unterziehen des resultierenden Produkts einer Wärmebehandlung, um das Metallalkoxid zu vernetzen und zu härten.

2. Verbundtitansäurebeschichtungsfilm nach Anspruch 1, wobei der Gehalt des Metallalkoxids 1 bis 100 Gew.-% beträgt, bezogen auf die flockenartige Titansäure in der wässrigen Mediumsuspension.

3. Verbundtitansäurebeschichtungsfilm nach Anspruch 1 oder 2, wobei die wässrige Mediumsuspension weiterhin ein Aminosilan-Kupplungsmittel in einer Menge von 0,1 bis 30 Gew.-% umfasst, bezogen auf die flockenartige Titansäure.

4. Verbundtitansäurebeschichtungsfilm nach irgendeinem der Ansprüche 1-3, wobei das Schichtitanat wiedergegeben wird durch eine Formel AₓM_{y}□₂Ti_{2-(y+2})O₄ [worin A und M verschiedene einwertige bis dreiwertige Metalle bedeuten und □ eine Defektstelle von Ti bedeutet; x eine positive reelle Zahl ist, welche der Bedingung 0 < x < 1 genügt, und y und z jeweils 0 oder eine positive reelle Zahl bedeuten, welche der Bedingung 0 < y+z < 1 genügt].

5. Verbundtitansäurebeschichtungsfilm nach irgendeinem der Ansprüche 1-4, wobei das Schichttitanat durch eine Formel K_{0.5-0.8}Li_{0.27}Ti_{1.73}O_{3.85-4} wiedergegeben wird.

6. Mit einer Verbundtitansäure beschichtetes Harzsubstrat, wobei der Titansäurebeschichtungsfilm gemäß irgendeinem der Ansprüche 1 bis 5 auf einem Harzsubstrat als ein Grundmaterial ausgebildet ist.

7. Mit einer Verbundtitansäure beschichtetes Harzsubstrat nach Anspruch 6, wobei das Harzsubstrat einer Oberflächenbehandlung unterzogen worden ist.

## Revendications

1. Pellicule protectrice à base d'acide titanique composite obtenue à l'aide des étapes consistant à :
appliquer une suspension en milieu aqueux sur un matériau de base, la suspension comprenant un acide titanique en paillettes et un alcoxyde métallique, l'acide titanique en paillettes étant préparé en traitant un titanate multicouche avec un acide, puis en laissant un composé basique organique agir sur celui-ci pour provoquer le gonflement ou la séparation de la couche intermédiaire ; et
soumettre le produit obtenu à un traitement thermique pour réticuler et durcir l'alcoxyde métallique.

2. Pellicule protectrice à base d'acide titanique composite selon la revendication 1, dans laquelle la teneur en alcoxyde métallique va de 1 à 100 % en masse par rapport à l'acide titanique en paillettes dans la suspension en milieu aqueux.

3. Pellicule protectrice à base d'acide titanique composite selon la revendication 1 ou 2, dans laquelle la suspension en milieu aqueux comprend en outre un agent de couplage aminosiloxane dans une quantité de 0,1 à 30 % en masse par rapport à l'acide titanique en paillettes.

4. Pellicule protectrice à base d'acide titanique composite selon l'une quelconque des revendications 1 à 3, dans laquelle le titanate multicouche est représenté par une formule AₓM_{y}□₂Ti_{2-(y+z)}O₄ [où A et M représentent différents métaux monovalents à trivalents, et □ représente une portion défectueuse de Ti. x est un nombre réel positif satisfaisant à l'équation 0 < x < 1, et y et z représentent respectivement 0 ou un nombre réel positif satisfaisant à l'équation 0 < y+z < 1].

5. Pellicule protectrice à base d'acide titanique composite selon l'une quelconque des revendications 1 à 4, dans laquelle le titanate multicouche est représenté par une formule K_{0,5-0.8}Li_{0,27}Ti_{1,73}O_{3,85-4.}

6. Substrat résineux recouvert d'acide titanique composite, dans lequel la pellicule protectrice à base d'acide titanique telle que décrite dans l'une quelconque des revendications 1 à 5 est formé sur un substrat résineux comme matériau de base.

7. Substrat résineux recouvert d'acide titanique composite selon la revendication 6, dans lequel le substrat résineux a été soumis à un traitement de surface.
